# FASCICULE DE BREVET EUROPEEN

(11) **EP 2 641 746 B1**
(45) Date de publication et mention de la délivrance du brevet: **25.10.2017**
(21) Numéro de dépôt: 13160645.1
(22) Date de dépôt: 22.03.2013
(51) Int. Cl.: B41J 3/54, B41J 11/00, B41M 3/00, B41M 3/14

(54) **Procédé de fabrication d'un document sécurisé**
Verfahren zur Erstellung eines gesicherten Dokuments
Method for manufacturing a secured document

(30) Priorité: 23.03.2012 FR 1252617
(43) Date de publication de la demande: 25.09.2013
(73) Titulaire: Oberthur Technologies, 92700 Colombes (FR)
(72) Inventeur: Morel, Yvonnic, 92700 Colombes (FR); Vere, Denis, 92700 Colombes (FR)
(74) Mandataire: Delumeau, François Guy

(56) Documents cités:
- EP-A1- 0 537 484
- WO-A1-02/36357
- WO-A1-2009/056351
- DE-A1-102007 012 696

## Description

### Arrière-plan de l'invention

La présente invention se situe dans le domaine de la personnalisation de documents sécurisés.

Par documents sécurisés, on entend notamment des documents d'identité, des passeports ou des cartes à micro-circuits.

Plus précisément, l'invention se situe dans le domaine de la sécurisation d'un document dans lequel la vérification de la validité du document s'effectue par analyse d'un motif imprimé sur le document, par exemple un guillochis.

Dans l'état actuel de la technique, il est connu d'imprimer, au cours d'une phase de production du document sécurisé, un motif sur le document, par exemple un guillochis, puis de personnaliser ce document au cours d'une phase ultérieure, en imprimant sur le document des données de personnalisation, par exemple au laser, comme le nom du porteur du document, sa date de naissance, ou sa nationalité.

L'impression du guillochis constitue une bonne sécurisation car il est excessivement difficile de reproduire un tel motif sans accéder aux matériels, aux logiciels ou aux paramètres utilisés pour créer ce motif.

Cependant, si un tiers malveillant parvient à se procurer les documents sécurisés à l'issue de la phase de production, à savoir après l'impression du guillochis, il est très facile de fabriquer des documents falsifiés, l'impression laser à proprement parler et les polices de caractères utilisées pour la fabrication de documents authentiques étant très faciles à reproduire.

L'invention vise un procédé de fabrication d'un document sécurisé qui ne présente pas ces inconvénients. DE 10 2007 012696 A1 ou WO 02/36357 A1 divulgue le préambule de la revendication 1.

### Objet et résumé de l'invention

Ainsi, et selon un premier aspect, l'invention concerne un procédé selon la revendication 1 de fabrication d'un document sécurisé comportant au moins une couche et un motif permettant la vérification de l'authenticité de ce document. Ce procédé comporte :
- une première étape d'impression d'au moins une partie de ce motif sur une première couche du document en utilisant une première technique d'impression ;
- une étape de positionnement d'un dispositif d'impression par rapport au document sécurisé en utilisant des points de référence imprimés lors de la première étape d'impression et détectés par ce dispositif ; et
- une étape d'impression d'une deuxième partie de l'image sur une deuxième couche du document en utilisant une deuxième technique d'impression différente de la première technique d'impression.
Conformément à l'invention, l'authenticité du document est déterminée en vérifiant le positionnement relatif des première et deuxième parties du motif.

Les première et deuxième couches peuvent être identiques ou différentes. L'invention s'applique donc en particulier aux documents dans lesquels les première et deuxième parties du motif sont imprimées sur une même couche et en particulier aux documents mono-couche.

Préférentiellement, la première impression est effectuée lors d'une phase de production du document sécurisé, la deuxième impression se faisant lors d'une phase de personnalisation de ce document.

Ainsi, même si un tiers malveillant parvient à se procurer de façon frauduleuse les documents sécurisés à l'issue de la phase de production, ces documents ne comportant que la première partie du motif, il leur est excessivement difficile d'imprimer la deuxième partie du motif avec suffisamment de précision pour éviter un décalage avec la première partie du motif.

Dans l'invention, le motif est un guillochis. Par conséquent, comme le motif est un guillochis, la fabrication frauduleuse d'un document sécurisé à partir d'un support vierge est excessivement complexe, puisqu'elle nécessite de se procurer au moins les données représentatives des première et deuxième parties de motif, de savoir identifier les points de référence et de savoir positionner précisément le deuxième dispositif d'impression à partir de ces points.

Dans un mode particulier de réalisation, une partie de ce guillochis comporte un micro-texte. Ce texte peut comprendre des données personnalisées, par exemple liées au porteur du document, telles que son nom, son prénom, sa taille ou sa date de naissance.

Ce mode de réalisation renforce considérablement la sécurité du document.

La deuxième partie du motif peut être imprimée sur un élément du document sécurisé pour lequel on souhaite renforcer la sécurisation, par exemple la photo du titulaire du document.

La première technique d'impression, utilisée pour imprimer la première partie d'image peut être une technique d'impression offset.

En variante, on peut utiliser une autre technique d'impression, par exemple la lithographie à sec (Waterless offset printing en anglais), ou la sérigraphie (silk screen en anglais).

Dans un mode préféré de réalisation de l'invention, la deuxième technique d'impression est une impression laser.

Dans le mode particulier de réalisation dans lequel le motif est un guillochis comportant un micro-texte, au moins une portion dudit micro-texte peut être dans ladite deuxième partie du motif.

Cette portion de micro-texte peut ainsi être imprimée au laser.

Dans un mode particulier de réalisation, au moins une portion du micro-texte est dans la première partie du motif en guillochis.

Cette technique est particulièrement adaptée lorsque l'on imprime la deuxième partie du motif lors d'une phase de personnalisation, en complément des données de personnalisation à proprement parler (par exemple, le nom et la date de naissance du porteur).

Il est en effet très avantageux d'utiliser un dispositif d'impression laser pour imprimer les données de personnalisation, l'impression laser permettant, de façon connue, un marquage très précis et répétable en position.

Lorsqu'on utilise une deuxième technique d'impression de type laser, il est préférable de représenter la deuxième partie du motif sous forme vectorielle. Néanmoins, la deuxième partie du motif peut aussi être représentée sous forme de pixels.

Dans un mode particulier de l'invention, la deuxième partie du motif recouvre partiellement la première partie d'image.

Dans ce cas, il est important qu'il ne la recouvre qu'en partie, de façon à ce que l'on puisse détecter des points de jonction entre les deux parties du motif.

On peut par exemple, dans ce mode de réalisation de l'invention, ajuster le niveau d'intensité de la couleur des pixels de la deuxième partie du motif par rapport à l'intensité des pixels de la première partie du motif, par exemple, en jouant sur l'intensité du faisceau laser par réglage du couple courant-vitesse ou couple courant-fréquence.

En variante, les deuxième et première parties du motif ne se recouvrent pas, la vérification de l'authenticité du document consistant à vérifier que les première et deuxième parties de motif se raccordent parfaitement.

Dans un exemple non-revendiqué, la détection de certains points de référence s'effectue en recherchant un élément prédéterminé dans la première partie du motif.

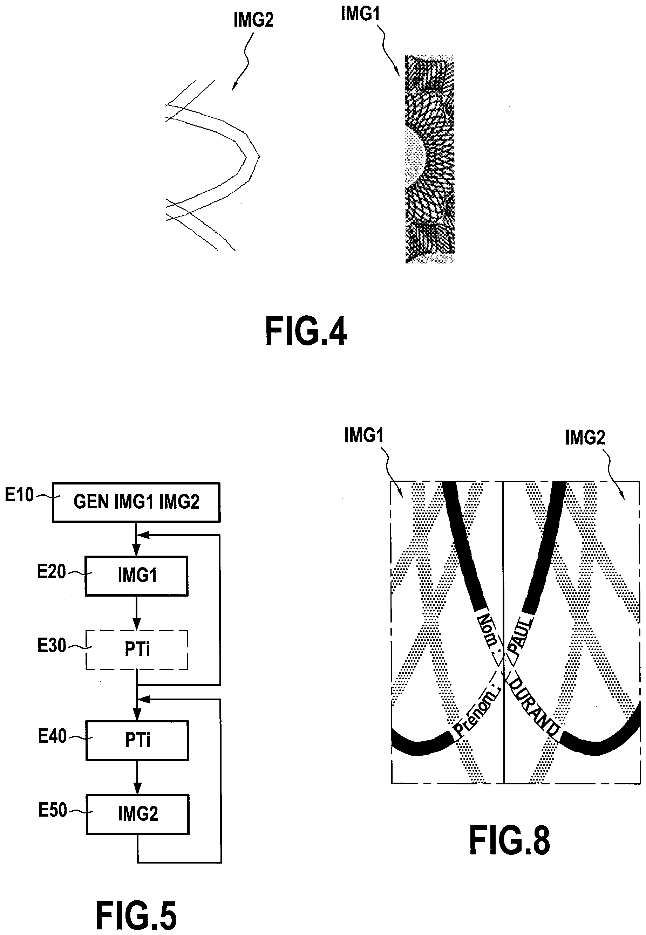

A cet effet, des points de référence peuvent être constitués par des "erreurs" délibérées introduites volontairement dans la première partie du motif, par exemple dans le guillochis, comme représenté ultérieurement en référence à la figure 6.

Préférentiellement, le positionnement du deuxième dispositif d'impression est effectué avec une précision comprise entre 1 et 100 microns.

Lorsqu'une telle précision est utilisée, il n'est pas possible de détecter un décalage entre la première partie d'image et la deuxième partie d'image à l'oeil nu, dès lors que l'oeil de l'utilisateur se situe à au moins 20 cm du document de sécurité. Des moyens de grossissement, tels qu'une loupe par exemple sont nécessaires.

Dans un exemple non-revendiqué, la précision est comprise entre 1 et 10 microns. Dans ces conditions la vérification peut être effectuée en utilisant un microscope ou une caméra numérique offrant un facteur de grossissement compris entre 10 et 50.

Dans un mode préféré de réalisation de l'invention, lorsque la première partie du motif est imprimée en plusieurs couches successives de couleurs différentes, le positionnement est effectué pour chacune de ces couches de couleurs à partir de points de référence de cette couleur.

Ce mode de réalisation particulièrement avantageux permet de s'affranchir d'éventuels décalages de positions entre des motifs de couleurs différentes.

### Brève description des dessins

D'autres caractéristiques et images de la présente invention ressortiront de la description faite ci-dessus en faisant référence aux dessins qui en illustrent un exemple de réalisation dépourvu de tout caractère limitatif. Sur ces dessins :
- la figure 1 représente un document sécurisé pouvant être fabriqué conformément à un mode particulier de l'invention ;
- la figure 2 représente ce document sécurisé après la première étape d'impression ;
- la figure 3 représente un système d'impression de la deuxième partie du motif du document sécurisé de la figure 1 ;
- la figure 4 représente des détails de la deuxième partie du motif ;
- la figure 5, sous forme d'organigramme les principales étapes d'un procédé de fabrication conforme à l'invention ;
- la figure 6 représente des points de référence pouvant être utilisés dans l'invention ; et
- la figure 7 représente de façon schématique un système de fabrication conforme à l'invention ;
- la figure 8 représente les détails d'un guillochis comportant un micro-texte pouvant être obtenu par un procédé de fabrication selon l'invention.

### Description détaillée de l'invention

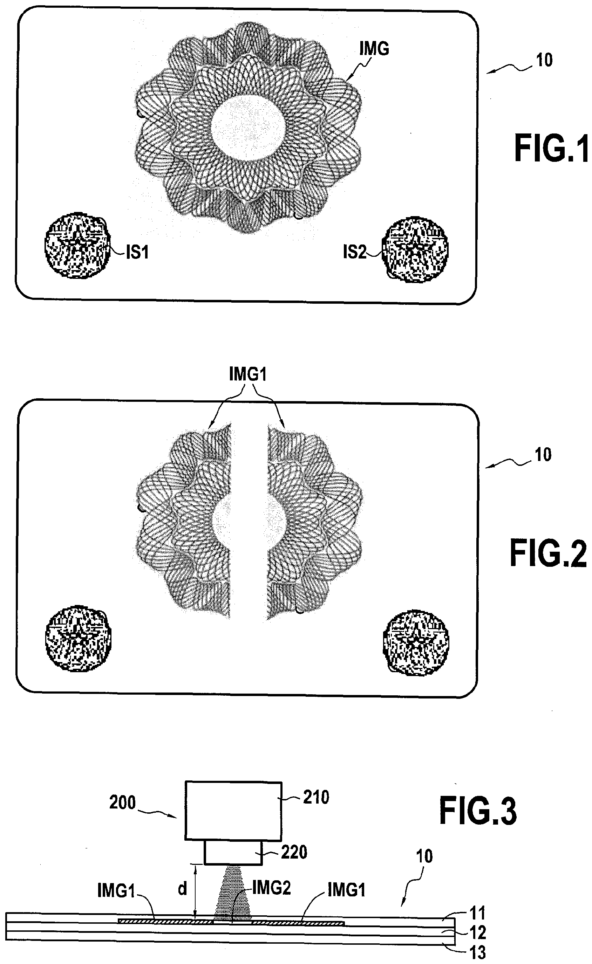

**La** **figure 1** représente un document sécurisé 10 pouvant être obtenu par un procédé de fabrication selon l'invention.

Dans l'exemple de réalisation décrit ici, ce document sécurisé comporte un motif IMG destiné à permettre la vérification de l'authenticité du document 10 et deux images secondaires IS1, IS2.

Le motif IMG est un guillochis.

Conformément à l'invention, le motif IMG est obtenu au cours de deux étapes d'impression successives. **La** **figure 2** représente le document sécurisé à l'issue de la première phase d'impression, seule une partie IMG1 du motif ayant été imprimée.

**La** **figure 3** représente l'impression de la deuxième partie du motif IMG2 par un dispositif d'impression laser 200.

La deuxième partie d'image peut par exemple avoir une surface comprise entre 1 et 25 mm².

Dans l'exemple de réalisation de la figure 3, le document sécurisé comporte trois couches 11, 12, 13, les deux parties du motif IMG1 et IMG2 étant imprimées sur la couche du milieu 12.

En variante, les première et deuxième parties du motif pourraient être imprimées sur des couches différentes par exemple respectivement sur les couches 11 et 12.

Sur cette figure, on a représenté la tête galvanométrique 210 et la lentille 220 du dispositif d'impression laser 200, cette lentille étant placée à une distance focale d de la couche 12 sur laquelle doit être réalisée l'impression.

Dans le mode de réalisation décrit ici, le système d'impression laser 200 présente les caractéristiques suivantes :
- Laser de type YAG utilisant une longueur d'onde de 1 064 nm ;
- Puissance de 5 à 30 W, préférentiellement de 10 à 20 W ;
- Marquage des guillochis avec les réglages suivants :
   - Mode de fonctionnement du laser : Pulsé ;
   - Type des éléments graphiques : vecteur ;
   - Vitesse de marquage : de 50 à 2 000 mm/s (de préférence 100 à 1 000 mm/s) ;
   - Résolution (mode pixel) : de 300 à 1 000 dpi (de préférence 450-650 dpi) ;
   - Puissance laser (intensité) : 10 à 90 % de la puissance maximum délivrable par le laser ;
   - Fréquence des pulses laser : 10 à 200 Khz ;
   - Lentilles : (de 56 à 254 mm (préférentiellement 100-163 mm).

**La** **figure 4** représente des détails de la deuxième partie du motif IMG2. Lorsque la deuxième partie du motif est imprimée par un dispositif laser, il est préférable de représenter, cette deuxième partie de motif par des données vectorielles. Dans ces conditions, les lignes de la deuxième partie du motif sont approximatisées par des segments de droite.

Conformément à l'invention, il est essentiel de bien positionner l'outil d'impression 200 de la deuxième partie de motif par rapport au document sécurisé.

Dans le mode de réalisation décrit ici, on utilise une méthode d'enregistrement permettant d'obtenir une précision de l'ordre de 1 à 10 microns. En vue d'atteindre cette précision, il est préférable d'avoir un mode de registration multipoints, avec de préférence quatre points de référence.

Pour cela on utilise un dispositif de vision apte à détecter des points de référence imprimés lors de la première impression.

Dans le mode de réalisation décrit ici, ce dispositif de vision est intégré au dispositif laser 200.

Ce système de vision présente, dans l'exemple décrit ici, les caractéristiques suivantes :
- Résolution 1 280 x 1 024
- 2 à 6 points de référence, préférentiellement 4.

Ces points de référence peuvent être des points de référence de la première partie du motif IMG1 ou non.

Ces points de référence sont selon l'invention un croisement de ligne de la guilloche.

Toutefois, et ce qui n'est pas revendiqué, des points de référence distincts du motif pour le positionnement de la deuxième partie pourraient être également imprimés lors de cette première phase d'impression et pourraient être un bord de lettre ou chiffre imprimé, ou d'un élément distinctif d'un logo ou blason.

Il est préférable de privilégier un contraste fort afin de bien discriminer les formes.

Dans l'exemple de la **figure 6****,** qui n'est pas revendiqué, mais qui aide à comprendre l'invention, on utilise quatre points de référence PT1, PT2, PT3, PT4, deux points de référence PT1 et PT4 étant détectés en recherchant un élément prédéterminé dans la première partie du motif IMG1.

Dans cet exemple, les points de référence PT2 et PT3 sont détectés en recherchant un élément prédéterminé dans les images secondaires IS1 et IS2.

La **figure 5** représente les principales étapes E10 à E50 d'un procédé de fabrication du document sécurisé 10.

Au cours d'une première étape E10, on génère les données représentatives des parties de motif IMG1 et IMG2, les données de la partie IMG2 étant représentées sous forme vectorielle.

Pour chacune des couleurs de la première partie du motif IMG1, on imprime, au cours d'une étape E20 les pixels de cette première partie de motif IMG1 de cette couleur, et éventuellement, au cours d'une étape E30, les points de référence PTᵢ de cette couleur.

Puis, on utilise un deuxième outil d'impression pour imprimer la deuxième partie du motif IMG2, par exemple le dispositif d'impression laser 200.

Pour chacune des couches de couleur de la première partie du motif, l'étape E40 consiste à détecter des points de référence PTᵢ de la couleur concernée afin de positionner correctement l'outil d'impression laser 200 , et l'étape E50 imprime la partie du motif correspondante de l'image IMG2.

Dans l'exemple de réalisation décrit ici, l'authenticité du document 10 peut être vérifiée à l'oeil nu. En variante, la vérification peut s'effectuer au moyen d'un outil de lecture simple par exemple une loupe ou une lentille ou au moyen d'un outil de vérification plus complexe par exemple un lecteur électronique.

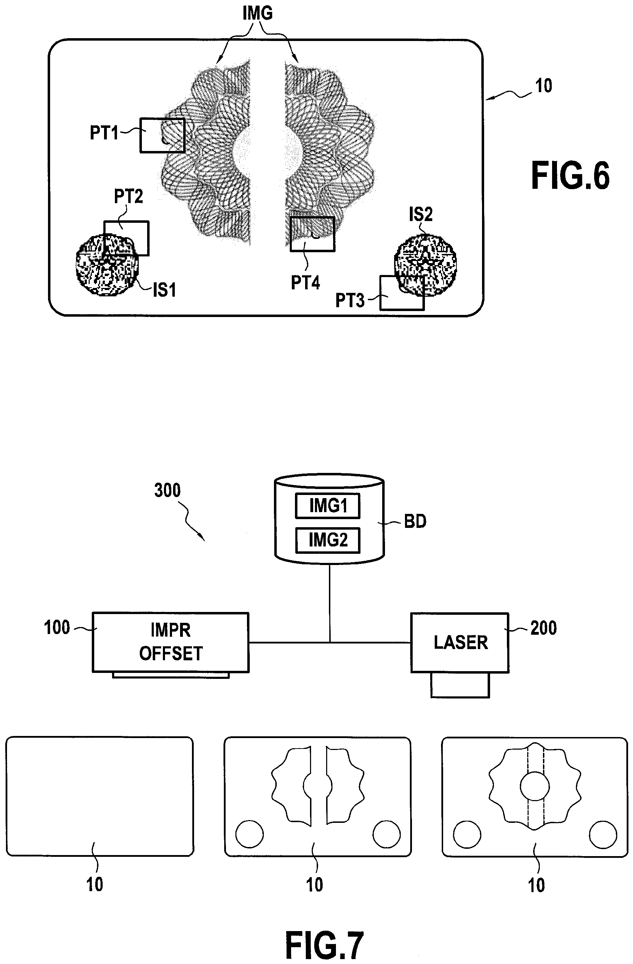

La **figure 7** représente un système 300, non-revendiqué, mais qui aide à comprendre l'invention, de fabrication du document sécurisé 10. Ce système comporte une base de données BD dans laquelle sont mémorisées des données représentatives de la partie de motif IMG1 et des données vectorielles représentatives de la deuxième partie de motif IMG2.

Ce système comporte un dispositif d'impression offset 100 apte à imprimer la première partie de motif IMG1 et un dispositif d'impression laser 200 apte à imprimer la deuxième partie de motif IMG2.

L'impression de la première partie de motif IMG1 peut par exemple être effectuée lors d'une phase de production du document sécurisé 10, l'impression de la deuxième partie de motif IMG2 étant réalisée lors d'une étape de personnalisation du document.

Dans cet exemple, au cours de l'étape de personnalisation, non seulement on imprime la deuxième partie de motif IMG2, mais également des données de personnalisation à proprement parler, par exemple le nom d'un porteur, un numéro, une adresse, une date de naissance...

Préférentiellement, le site de production du document (dans lequel s'effectue la première impression offset) et le site de personnalisation (dans lequel s'effectue l'impression au laser de la deuxième partie d'image) sont préférentiellement des sites cloisonnés pour renforcer la sécurité du processus. Dans un tel schéma, les données représentatives de la deuxième partie d'image sont transmises au dispositif d'impression via un réseau sécurisé.

La **figure 8** représente les détails d'un guillochis comportant un micro-texte obtenu par un procédé de fabrication selon l'invention.

Dans ce mode de réalisation, le guillochis comporte des lignes interrompues par du micro-texte correspondant à des données personnalisées du porteur du document, à savoir son nom et son prénom.

Dans ce mode de réalisation, une portion du micro-texte est imprimée en offset sur le premier motif IMG1 et une autre portion du micro-texte est imprimée au laser sur le deuxième motif IMG2.

## Revendications

1. Procédé de fabrication d'un document sécurisé (10) comportant au moins une couche (11, 12, 13) et un motif permettant la vérification de l'authenticité dudit document, ce procédé comportant :
- une première étape (E20) d'impression d'au moins une première partie (IMG1) dudit motif sur une première de l'au moins une couche en utilisant une première technique d'impression ;
- une étape (E50) d'impression d'une deuxième partie (IMG2) dudit motif sur une deuxième de l'au moins une couche par un dispositif d'impression en utilisant une deuxième technique d'impression différente de la première technique d'impression,
l'authenticité dudit document pouvant être déterminée en vérifiant le positionnement relatif desdites première (IMG1) et deuxième (IMG2) parties du motif (IMG),
caractérisé en ce ledit motif est un guillochis, et en ce que le procédé comprend en outre :
- une étape de détection de points de référence, imprimés lors de ladite première étape d'impression, les points de référence étant des croisements de lignes de guillochis ;
- une étape (E40) de positionnement dudit dispositif d'impression (200) par rapport audit document sécurisé (10) en utilisant lesdits points de référence.

2. Procédé de fabrication d'un document sécurisé selon la revendication 1, **caractérisé en ce qu'**on utilise de 2 à 6 points de référence, préférentiellement 4.

3. Procédé de fabrication d'un document sécurisé (10) selon la revendication 1, **caractérisé en ce qu'**une partie dudit guillochis comporte un micro-texte.

4. Procédé de fabrication d'un document sécurisé (10) selon la revendication 3, **caractérisé en ce qu'**au moins une portion dudit micro-texte est dans ladite deuxième partie (IMG2) du motif.

5. Procédé de fabrication d'un document sécurisé (10) selon la revendication 3 ou 4, **caractérisé en ce qu'**au moins une portion dudit micro-texte est dans ladite première partie (IMG2) du motif.

6. Procédé de fabrication d'un document sécurisé (10) selon l'une quelconque des revendications 1 à 5, **caractérisé en ce que** ladite première technique d'impression est une impression offset.

7. Procédé de fabrication d'un document sécurisé (10) selon l'une quelconque des revendications 1 à 6, **caractérisé en ce que** ladite deuxième technique d'impression est une impression laser.

8. Procédé de fabrication d'un document sécurisé (10) selon la revendication 7, **caractérisé en ce que** ladite deuxième partie du motif est représentée sous forme vectorielle.

9. Procédé de fabrication d'un document sécurisé (10) selon l'une quelconque des revendications 1 à 8, **caractérisé en ce que** ladite deuxième partie du motif recouvre partiellement ladite première partie du motif.

10. Procédé de fabrication d'un document sécurisé (10) selon l'une quelconque des revendications 1 à 9 dans lequel ladite première partie du motif est imprimée en plusieurs couches successives de couleurs différentes, **caractérisé en ce que** ledit positionnement est effectué pour chacune des couches de couleur à partir de points de référence de ladite couleur.

## Patentansprüche

1. Verfahren zur Erstellung eines gesicherten Dokuments (10), das mindestens eine Schicht (11, 12, 13) und ein Muster umfasst, die das Prüfen der Authentizität des Dokuments erlauben, wobei das Verfahren umfasst:
- einen ersten Schritt (E20) des Druckens mindestens eines ersten Teils (IMG1) des Musters auf eine erste der mindestens einen Schicht unter Verwenden einer ersten Drucktechnik,
- einen Schritt (E50) des Druckens eines zweiten Teils (IMG2) des Musters auf eine zweite der mindestens einen Schicht durch eine Druckvorrichtung unter Verwenden einer zweiten Drucktechnik, die von der ersten Drucktechnik unterschiedlich ist,
wobei die Authentizität des Dokuments durch Prüfen der relativen Positionierung des ersten (IMG1) und zweiten (IMG2) Teils des Musters (IMG) bestimmt werden kann,
**dadurch gekennzeichnet, dass** das Muster eine Guilloche ist, und dass das Verfahren ferner umfasst:
- einen Schritt des Erfassens von Referenzpunkten, die bei dem ersten Druckschritt gedruckt werden, wobei die Referenzpunkte Kreuzungen von Guilloche-Linien sind,
- einen Schritt (E40) des Positionierens der Druckvorrichtung (200) in Bezug zu dem gesicherten Dokument (10) unter Verwenden der Referenzpunkte.

2. Verfahren zur Erstellung eines gesicherten Dokuments nach Anspruch 1, **dadurch gekennzeichnet, dass** man 2 bis 6 Referenzpunkte, bevorzugt 4, verwendet.

3. Verfahren zur Erstellung eines gesicherten Dokuments (10) nach Anspruch 1, **dadurch gekennzeichnet, dass** ein Teil der Guilloche einen Mikrotext umfasst.

4. Verfahren zur Erstellung eines gesicherten Dokuments (10) nach Anspruch 3, **dadurch gekennzeichnet, dass** mindestens ein Abschnitt des Mikrotexts in dem zweiten Teil (IMG2) des Musters liegt.

5. Verfahren zur Erstellung eines gesicherten Dokuments (10) nach Anspruch 3 oder 4, **dadurch gekennzeichnet, dass** mindestens ein Abschnitt des Mikrotexts in dem ersten Teil (IMG1) des Musters liegt.

6. Verfahren zur Erstellung eines gesicherten Dokuments nach einem der Ansprüche 1 bis 5, **dadurch gekennzeichnet, dass** die erste Drucktechnik ein Offsetdruck ist.

7. Verfahren zur Erstellung eines gesicherten Dokuments (10) nach einem der Ansprüche 1 bis 6, **dadurch gekennzeichnet, dass** die zweite Drucktechnik ein Laserdruck ist.

8. Verfahren zur Erstellung eines gesicherten Dokuments (10) nach Anspruch 7, **dadurch gekennzeichnet, dass** der zweite Teil des Musters in Vektorform dargestellt ist.

9. Verfahren zur Erstellung eines gesicherten Dokuments (10) nach einem der Ansprüche 1 bis 8, **dadurch gekennzeichnet, dass** der zweite Teil des Musters den ersten Teil des Musters teilweise abdeckt.

10. Verfahren zur Erstellung eines gesicherten Dokuments (10) nach einem der Ansprüche 1 bis 9, wobei der erste Teil des Musters in mehreren aufeinanderfolgenden Schichten in unterschiedlichen Farben gedruckt wird, **dadurch gekennzeichnet, dass** die Positionierung für jede der Farbschichten ausgehend von Referenzpunkten der Farbe erfolgt.

## Claims

1. A method for producing a secure document (10) including at least one layer (11, 12, 13) and a pattern allowing verification of the authenticity of said document, this method including:
- a first step (E20) for printing at least a first part (IMG1) of said pattern on a first of the at least one layer by using a first printing technique;
- a step (E50) for printing a second part (IMG2) of said pattern on a second of the at least one layer by a printing device using a second printing technique different from the first printing technique,
the authenticity of said document being able to be determined by verifying the relative positioning of said first (IMG1) and second (IMG 2) parts of the pattern (IMG),
**characterized in that** said pattern is a guilloche, and **in that** the method further comprises:
- a step for detecting reference points, printed during said first printing step, the reference points being intersections of guilloche lines;
- a step (E40) for positioning said printing device (200) relative to said secure document (10) by using said reference points.

2. The method for producing a secure document according to claim 1, **characterized in that** 2 to 6 reference points are used, preferably 4.

3. The method for producing a secure document (10) according to claim 1, **characterized in that** part of said guilloche includes a micro-text.

4. The method for producing a secure document (10) according to claim 3, **characterized in that** at least one portion of said micro-text is in said second part (IMG2) of the pattern.

5. The method for producing a secure document (10) according to claim 3 or 4, **characterized in that** at least one portion of said micro-text is in said first part (IMG2) of the pattern.

6. The method for producing a secure document (10) according to any one of claims 1 to 5, **characterized in that** said first printing technique is an offset printing.

7. The method for producing a secure document (10) according to any one of claims 1 to 6, **characterized in that** said second printing technique is a laser printing.

8. The method for producing a secure document (10) according to claim 7, **characterized in that** said second part of the pattern is shown in vectorial form.

9. The method for producing a secure document (10) according to any one of claims 1 to 8, **characterized in that** said second part of the pattern partially overlaps said first part of the pattern.

10. The method for producing a secure document (10) according to any one of claims 1 to 9, wherein said first part of the pattern is printed in several successive layers of different colors, **characterized in that** said positioning is done for each of the layers of color from reference points of said color.
